# EUROPEAN PATENT SPECIFICATION

(11) **EP 2 205 840 B1**
(45) Date of publication and mention of the grant of the patent: **22.02.2012**
(21) Application number: 08847324.4
(22) Date of filing: 22.10.2008
(51) Int. Cl.: F02B 19/10, F02B 19/16

(54) **PRECHAMBER ARRANGEMENT OF A COMBUSTION ENGINE**
VORKAMMERANORDNUNG FÜR EINEN VERBRENNUNGSMOTOR
DISPOSITIF DE PRÉCHAMBRE D'UN MOTEUR À COMBUSTION

(30) Priority: 09.11.2007 FI 20075793
(43) Date of publication of application: 14.07.2010
(73) Proprietor: Wärtsilä Finland Oy, 65380 Vaasa (FI)
(72) Inventor: GRANLUND, Ulf, FI-65320 Vasa (FI); SILVONEN, Aulis, FI-65230 Vaasa (FI); LIAVÅG, Lars Ola, FI-65230 Vaasa (FI); SAARI, Petri, FI-65100 Vaasa (FI); SILLANPÄÄ, Hannu, FI-65280 Vaasa (FI)
(74) Representative: Gustafsson, Aulis Valdemar
(86) International application number: PCT/FI2008/050591
(87) International publication number: WO 2009/060119

(56) References cited:
- DE-C- 936 546
- GB-A- 942 169
- US-A- 3 082 751
- US-A- 4 426 966

## Description

The invention relates to a prechamber arrangement of a combustion engine according to the preamble of Claim 1.

In combustion engines, nitrogen oxides (NOx) are produced when a mixture of fuel and air is burnt. Typically, the amount of nitrogen oxides increases when the combustion temperature rises. High peak combustion temperatures increase the formation of nitrogen oxides, in particular. The peak combustion temperatures and, thus, the amount of nitrogen oxides formed in the combustion can be decreased by increasing the air/fuel ratio of the fuel mixture, i.e., using a leaner fuel mixture. Particularly in diesel engines, which are based on compression ignition, large amounts of nitrogen oxides are produced. Consequently, gas engines are often preferably used because lesser amounts of nitrogen oxides are produced therein. However, due to the lean fuel mixture, the combustion may be incomplete especially in piston engines, where the cylinder diameter is large.

In lean mixture engines or Otto-cycle engines, the ignition does not take place automatically but auxiliary devices, such as spark plugs are needed to cause ignition. To enhance combustion and to protect the ignition means, some lean mixture engines use a prechamber that is connected to the combustion space of the cylinder. A richer fuel mixture is fed into the prechamber to be ignited and conveyed to the combustion space, whereby the leaner fuel mixture in the combustion space ignites. The prechamber is employed especially in lean mixture engines that use gas as fuel. In that case, the prechamber is provided with a spark plug, which is used to ignite the richer fuel mixture.

Generally, the prechambers are rotationally symmetrical. The actual chamber, where the fuel is ignited, may vary as to its shape, being spherical or elliptical, for example. The prechamber is connected to the main combustion space by a channel, which ends in several nozzle openings. The number, the direction and the diameter of the openings are optimized according to the respective situation, taking into account piston reliefs, for example. In spite of a relatively high compression ratio, a glow element or a spark plug is used as an ignition aid.

A disadvantage of the arrangement is the high temperature in the prechamber, whereby traditional materials do not endure; hot corrosion may occur, for example. In particular, the nozzle openings are subjected to stress, when the combustion reaction advances from the prechamber to the combustion space through the nozzle openings. In that case, the parts must be replaced or new usable materials must be found. Particularly in gas engines, the prechamber is subjected to great high-pressure gradients and maximum pressures.

Specification US 4426966 discloses prechamber arrangements, which have complex structures and supports and, consequently, high manufacturing costs. These known solutions employ ceramic material in some parts of the prechamber. The ceramic materials endure heat and corrosion well but, on the other hand, are fragile, expensive and difficult to machine. Furthermore, the different coefficients of heat expansion of the ceramic materials can cause problems in the joints, as the lower part of the prechamber with its nozzle openings, in particular, is subjected to stress.

Specification US3 082 751 discloses a prechamber arrangement according to the preamble of claim 1.

The purpose of the invention is to provide an arrangement that minimizes the problems of known technology. In particular, the purpose of the invention is to provide an arrangement, which can be used to improve the structure and the operation of the prechamber, enabling a simple installation and facilitating the maintenance and repair operations.

The objects of the invention are achieved as is described in claim 1 and more in detail in the other claims. According to the invention, the body part is supported on a cylinder head and provided with joint surfaces to support the nozzle part on the body part. As only the body part is supported on the cylinder head, the solution is simple and easy to install and detach for maintenance and repair.

The said joint surfaces of the body part are preferably conical. The nozzle part can preferably be attached to the body part by means of a shrink fit, whereby these parts are made to compress against each other so that the arrangement stays together without extra components and other fastening means.

According to a preferred embodiment of the invention, the prechamber arrangement comprises a locking part arranged inside the prechamber, by which the nozzle part is attached to the body part. The separate locking part can be used to ensure that the body part and the nozzle part stay in place attached to each other under all conditions, but that they can still be detached from each other, as desired, depending on the attachment solution used.

The locking part can with advantage be attached to the body part by a shrink fit, welding, soldering, a friction joint or a threaded joint or the like.

In one embodiment, the locking part includes a wedge-shaped element, which is arranged between the actual locking part and the body part. In another embodiment, the locking part itself is a wedge-shaped component or a number of components that are arranged between the shaped head of the nozzle part, which is on the side of the prechamber, and the body part. The wedge effect can be used to further secure the stability of the attachment.

Taking into account the flow conditions of the prechamber, the locking part is shaped into a uniform structure so that no interferences are caused to the flows in the prechamber. When needed, the locking part can also be cooled.

The body part can with advantage be provided with a separate cover part, which is attached thereto and by means of which the prechamber arrangement is attached to the cylinder head. In this way, more freedom is allowed for the manufacture and the selection of materials. With respect to the manufacture, the body part can have stricter tolerance requirements because of the parts that are attached to the body part or parts that surround the same. The body part can preferably be manufactured of a heat-resistant material, such as steel or another metal alloy.

The cover part, in turn, is provided with an ignition means, such a feeding means of the pilot fuel and/or a spark plug, whereby its machineability is significant for the selection of material.

Both the nozzle part and the locking part can with advantage be manufactured of a heat-resistant, oxidation-resistant and/or corrosion-resistant material, such as ceramics. In these parts, the best properties of the ceramics can be utilized in the most advantageous manner.

For the manufacture, in particular, it is preferable that the body part and the locking part are rotationally symmetrical components. That way, also the behaviour of the components in varying heat and corrosion conditions is consistent, which is suited to prevent the parts from breaking.

Accordingly, on certain preconditions, the invention also enables the body part, the nozzle part and the locking part to be replaceable. In that case, when a part breaks, the remaining parts can be utilized, which is advantageous for the maintenance and the costs.

In the following, the invention is described by way of examples and with reference to the appended schematic drawings, in which
Fig. 1 shows a basic cross section of the upper part of a cylinder of an engine and its cylinder head, and a cutaway drawing of a prechamber arrangement according to the invention installed in connection therewith;
Fig. 2 shows an enlargement of the arrangement of the locking part and the nozzle part based on the prechamber arrangement of Fig. 1,
Figs. 3 and 4 show enlargements of alternative embodiments of the locking part related to the prechamber arrangement according to the invention.

Reference number 1 in the drawings refers to a combustion engine comprising a cylinder head 2 and at least one cylinder including a cylinder sleeve 6 and a main combustion space 7. The gas exchange of the cylinder is arranged, in a manner known per se, through the channels of the cylinder head 2 and the valves that are provided in connection with the same.

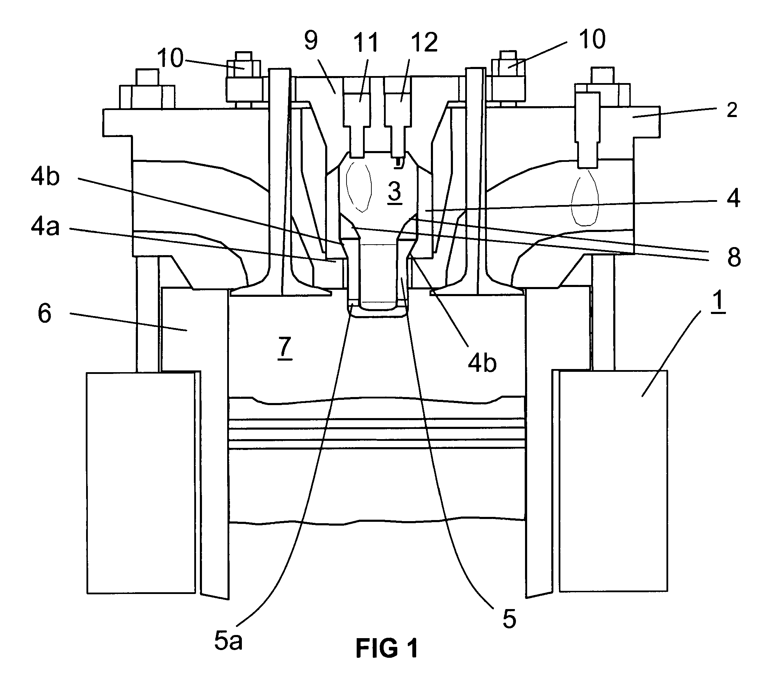

As can be seen in Fig. 1, in connection with the cylinder head 2, there is a separate prechamber arrangement connected to the cylinder, including a body part 4 and a cover part 9 that is supported on the body part, which together essentially define a prechamber 3, which through a nozzle part 5 provided with nozzle openings 5a communicates with the main combustion space 7 of the cylinder.

The cylinder head 2 comprises a recess or a similar space for the prechamber arrangement, whereby the body part 4 is supported on the cylinder head 2 by means of its joint surface 4a. The attachment of the body part 4 to the cylinder head 2 is arranged by means of the cover part 9 by bolts 10. The cover part 9 does not need to be separately attached to the body part 4, but these parts are arranged against each other by means of suitably shaped corresponding surfaces, as shown in Fig. 1. The cover part 9 comprises, in a manner known per se, what are called feeding means 11 for the pilot fuel and a spark plug 12. The ignition and combustion process itself is carried out in a manner known as such; therefore, it is not described here in detail.

As further shown in Fig. 1, the lower part of the body part 4 is shaped so that the nozzle part 5 of the prechamber arrangement is directly supported on the body part 4. The body part 4 can be manufactured of steel or another metal alloy that is good in enduring heat, and the nozzle part 5 preferably comprises ceramic or other corresponding material, which also endures intense heat and corrosion. Consequently, the body part 4 and the nozzle part 5 can preferably be attached to each other, for example, utilizing the shrink fit and without any other fastenings. Consequently, they can also be detached from each other, as needed, and thus also separately replaced.

The solution in Fig. 1 is only schematic; therefore, the prechamber in practice is shaped in a manner required by the desired flow conditions, generally, on the inside by using rounded surfaces. The number, the size and the orientation of the nozzle openings 5a of the nozzle part 5 are selected as needed. In practice, the joint surface 4a of the body part 4 can preferably be conical. Similarly, the joint surface 4b between the body part 4 and the nozzle part 5 is preferably conical in the manner shown in the figure. When the body part 4 is made of steel or other suitable metal alloy, its machineability is better compared with that of ceramics. Consequently, the surfaces, which require more accurate dimensioning and are used to attach the prechamber arrangement to the cylinder head 2, are preferably placed in the body part 4.

As shown in Fig. 1, the body part 4 and the nozzle part 5 can also be attached to each other by means of a separate locking part 8, which can be attached to the body part 4, for example, by a shrink fit, welding, soldering, a threaded joint, or in some other similar manner. In that case, whether the parts can also be separately dismounted and replaced, naturally depends on the way of attachment selected. In any case, the locking part 8 can be used to secure the attachment of the nozzle part 5, as needed, and its staying in place under the operating conditions of the engine.

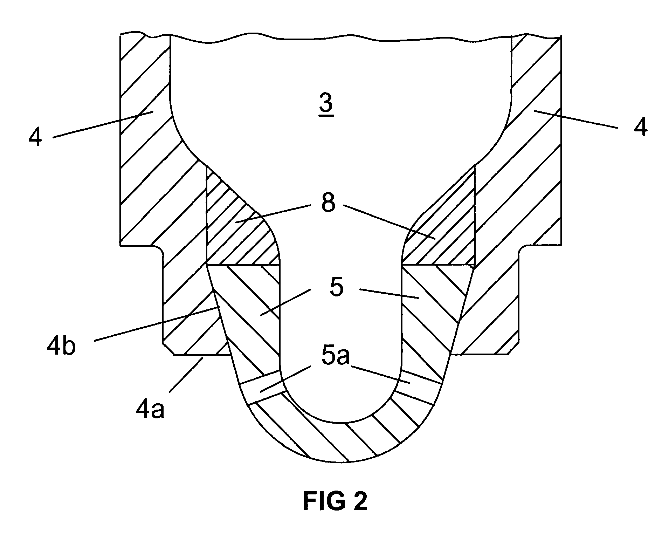

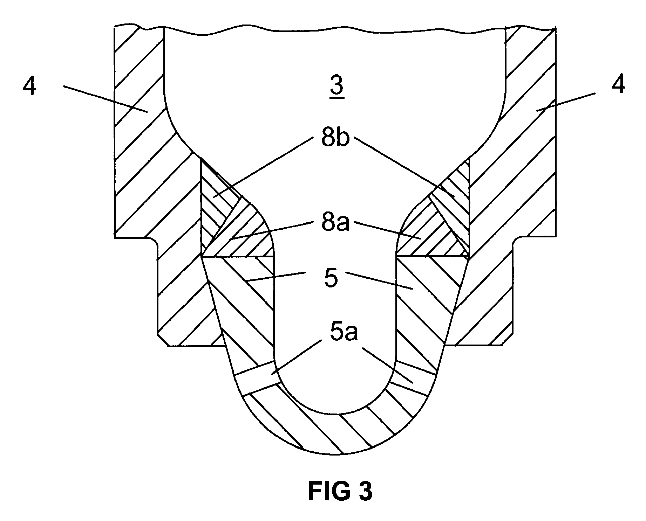

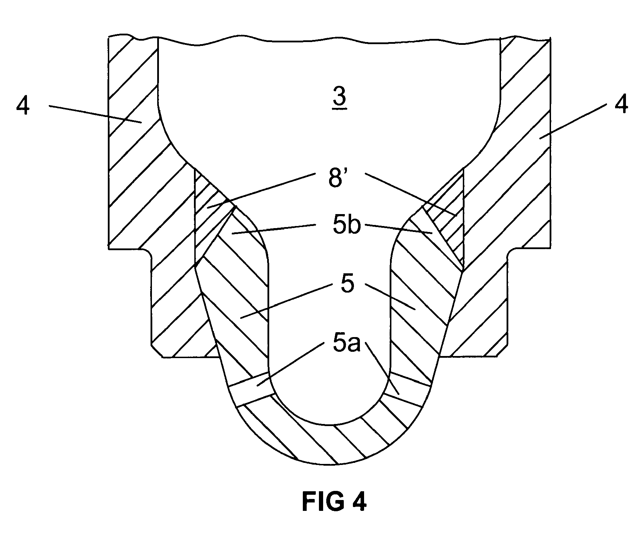

In the embodiment of Fig. 1, the locking part 8 is preferably a uniform, annular component. This is best seen in Fig. 2, which shows an enlargement of the arrangement of the locking part and the nozzle part based on the prechamber arrangement of Fig. 1. Figs. 3 and 4 show alternative embodiments of the locking part, comprising a wedge shape and, as a consequence, a wedge effect, providing additional possibilities for the selection of the way of attachment.

In the solution of Fig. 3, the locking part comprises two components 8a and 8b, the latter providing the wedge effect. Component 8a, in turn, can preferably be attached by the shrink fit to the rest of the structure, whereby it can also be detached and replaced but, as needed, the attachment can also be carried out by welding, for example.

In the solution of Fig. 4, in turn, the upper end 5b of the nozzle part 5 is shaped to be upwards convergent in the figure so that the actual locking part 8' herein is a wedge-shaped component that is installed between the said upper end of the nozzle part 5 and the body part 4.

In the embodiments of Figs. 3 and 4, the nozzle part 5 can also be constructed of various components, such as sectors, and they can be attached to the body part 4 by means of the locking part 8 or 8'.

The invention is not limited to the embodiments presented, but various modifications can be considered within the appended claims.

## Claims

1. A prechamber arrangement to be fitted into the cylinder head (2) of a combustion engine (1), comprising a separate body part (4) and a nozzle part (5), which together mainly define a prechamber (3), which is connected to a main combustion space (7) of a cylinder (6) through nozzle openings (5a) of the nozzle part (5), whereby the body part (4) is supported on the cylinder head (2) and provided with joint sur faces (4b) for supporting the nozzle part (5) on the body part (4), and **characterized in that** the said joint surfaces (4b) are conical.

2. A prechamber arrangement according to claim 1, **characterized in that** the nozzle part (5) is attached to the body part (4) by means of a shrink fit.

3. A prechamber arrangement according to claim 1 or 2, **characterized in that** it comprises a locking part (8) that is arranged inside the prechamber (3) for attaching the nozzle part (5) to the body part (4).

4. A prechamber arrangement according to claim 3, **characterized in that** the locking part (8) is attached to the body part (4) by a shrink fit, welding, soldering, a friction joint, a threaded joint, or in a corresponding manner.

5. A prechamber arrangement according to claim 3 or 4, **characterized in that** the locking part (8) includes a wedge-shaped element (8b), which is arranged between the actual looking part (8) and the body part (4).

6. A prechamber arrangement according to claim 3 or 4, **characterized in that** the locking part is a wedge shaped component (8') or a number of components that are arranged between the shaped end (5b) of the nozzle part (5), which is on the side of the prechamber (3), and the body part (4).

7. A prechamber arrangement according to any of claims 3 to 6, **characterized in that** the locking part (8, 8a, 8') is shaped into a uniform structure, tacking into account the flowing conditions in the prechamber (3).

8. A prechamber arrangement according to any of the preceding claims. **characterized in that** the body part (4) is provided with a separate cover part (9), which is attached thereto and through which the prechamber arrangement is attached to the cylinder head (2).

9. A prechamber arrangement according to claim 8, **characterized in that** the cover part (9) is provided with an ignition means, such as the feeding means (11) of a pilot fuel and/or a spark plug (12).

10. A prechamber arrangement According to any of the preceding claim, **characterized in that** the nozzle part (5) and/or the locking part (8, 8a, 8') are manufactured of a heat, oxidation and/or corrosion resistant material, such as ceramics.

11. A prechamber arrangement according to any of the preceding claims, **characterized in that** the body part (4) and the rocking part (8, 8a, 8') are rotationally symmetrical components.

12. A prechamber arrangement according to any of the preceding claims, **characterized in that** the body part (4), the nozzle part (5) and the locking part (8, 8a, 8') are replaceable components.

## Patentansprüche

1. Vorkammer-Anordnung, die im Zylinderkopf (2) eines Verbrennungsmotors (1) anzubringen ist, wobei sie einen gesonderten Korpusteil (4) und einen Düsenteil (5) umfasst, die zusammen größtenteils eine Vorkammer (3) definieren, die durch Düsenöffnungen (5a) des Düsenteils (5) mit einem Hauptverbrennungsraum (7) eines Zylinders (6) verbunden ist, wobei der Korpusteil (4) auf dem Zylinderkopf (2) getragen wird und mit Anschlussflächen (4b) versehen ist, um den Düsenteil (5) auf dem Korpusteil (4) zu tragen, und **dadurch gekennzeichnet, dass** die Anschlussflächen (4b) konisch sind.

2. Vorkammer-Anordnung nach Anspruch 1, **dadurch gekennzeichnet, dass** der Düsenteil (5) mit Hilfe eines Schrumpfsitzes an dem Korpusteil (4) befestigt ist.

3. Vorkammer-Anordnung nach Anspruch 1 oder 2, **dadurch gekennzeichnet, dass** sie einen Arretierungsteil (8) umfasst, der innerhalb der Vorkammer (3) angeordnet ist, um den Düsenteil (5) an dem Korpusteil (4) zu befestigen.

4. Vorkammer-Anordnung nach Anspruch 3, **dadurch gekennzeichnet, dass** der Arretierungsteil (8) durch einen Schrumpfsitz, Schweißen, Löten, eine Reibungsverbindung, eine Gewindeverbindung oder auf eine entsprechende Weise an dem Korpusteil (4) befestigt ist.

5. Vorkammer-Anordnung nach Anspruch 3 oder 4, **dadurch gekennzeichnet, dass** der Arretierungsteil (8) ein keilförmiges Element (8b) einschließt, das zwischen dem eigentlichen Arretierungsteil (8) und dem Korpusteil (4) angeordnet ist.

6. Vorkammer-Anordnung nach Anspruch 3 oder 4, **dadurch gekennzeichnet, dass** der Arretierungsteil ein keilförmiges Bauteil (8') oder eine Anzahl von Bauteilen ist, die zwischen dem geformten Ende (5b) des Düsenteils (5), das sich auf der Seite der Vorkammer (3) befindet, und dem Korpusteil (4) angeordnet sind.

7. Vorkammer-Anordnung nach einem der Ansprüche 3 bis 6, **dadurch gekennzeichnet, dass** der Arretierungsteil (8, 8a, 8') zu einer gleichförmigen Struktur geformt ist, wobei die Strömungsbedingungen in der Vorkammer (3) berücksichtigt sind.

8. Vorkammer-Anordnung nach einem der vorhergehenden Ansprüche, **dadurch gekennzeichnet, dass** der Korpusteil (4) mit einem gesonderten Abdeckungsteil (9) versehen ist, der an demselben befestigt ist und durch den die Vorkammer-Anordnung an dem Zylinderkopf (2) befestigt ist.

9. Vorkammer-Anordnung nach Anspruch 8, **dadurch gekennzeichnet, dass** der Abdeckungsteil (9) mit einem Zündungsmittel, wie beispielsweise dem Einspeisemittel (11) eines Zünd-Kraftstoffs und/oder einer Zündkerze (12), versehen ist.

10. Vorkammer-Anordnung nach einem der vorhergehenden Ansprüche, **dadurch gekennzeichnet, dass** der Düsenteil (5) und/oder der Arretierungsteil (8, 8a, 8') aus einem hitze-, oxidations- und/oder korrosionsbeständigen Werkstoff, wie beispielsweise Keramik, gefertigt sind.

11. Vorkammer-Anordnung nach einem der vorhergehenden Ansprüche, **dadurch gekennzeichnet, dass** der Korpusteil (4) und der Arretierungsteil (8, 8a, 8`) rotationssymmetrische Bauteile sind.

12. Vorkammer-Anordnung nach einem der vorhergehenden Ansprüche, **dadurch gekennzeichnet, dass** der Korpusteil (4), der Düsenteil (5) und der Arretierungsteil (8, 8a, 8') austauschbare Bauteile sind.

## Revendications

1. Agencement de préchambre à ajuster dans la tête de cylindre (2) d'un moteur à combustion interne (1), comprenant une partie de corps séparé (4) et une partie de buse (5), qui définissent conjointement principalement une préchambre (3), laquelle est raccordée à un espace de combustion principal (7) d'un cylindre (6) par l'intermédiaire d'ouvertures de buse (5a) de la partie de buse (5), moyennant quoi la partie de corps (4) est supportée sur la tête de cylindre (2) et pourvue de surfaces de joint (4b) pour supporter la partie de buse (5) sur la partie de corps (4) et **caractérisé en ce que** lesdites surfaces de joint (4b) sont coniques.

2. Agencement de préchambre selon la revendication 1, **caractérisé en ce que** la partie de buse (5) est fixée à la partie de corps (4) au moyen d'un ajustage fretté.

3. Agencement de préchambre selon la revendication 1 ou 2, **caractérisé en ce que** il comprend une partie de verrouillage (8) qui est disposée à l'intérieur de la préchambre (3) pour fixer la partie de buse (5) à la partie de corps (4).

4. Agencement de préchambre selon la revendication 3, **caractérisé en ce que** la partie de verrouillage (8) est fixée à la partie de corps (4) par un ajustage fretté, par soudure, brasage, un joint à friction, un joint fileté, ou d'une manière correspondante.

5. Agencement de préchambre selon la revendication 3 ou 4, **caractérisé en ce que** la partie de verrouillage (8) inclut un élément cunéiforme (8b), qui est disposé entre la partie de verrouillage (8) proprement dite et la partie de corps (4).

6. Agencement de préchambre selon la revendication 3 ou 4, **caractérisé en ce que** la partie de verrouillage est un composant cunéiforme (8') ou un nombre de composants qui sont disposés entre l'extrémité façonnée (5b) de la partie de buse (5), qui est sur le côté de la préchambre (3) et la partie de corps (4).

7. Agencement de préchambre selon une quelconque des revendications 3 à 6, **caractérisé en ce que** la partie de verrouillage (8, 8a, 8') est façonnée en une structure uniforme, en prenant en compte les conditions d'écoulement dans la préchambre (3).

8. Agencement de préchambre selon une quelconque des revendications précédentes, **caractérisé en ce que** la partie de corps (4) est pourvue d'une partie de couvercle séparée (9) qui est fixée à celle-ci et à travers laquelle l'agencement de préchambre est fixé à la chambre de cylindre (2).

9. Agencement de préchambre selon la revendication 8, **caractérisé en ce que** la partie de couvercle (9) est pourvue d'un moyen d'allumage, comme le moyen d'alimentation (11) d'un carburant pilote et/ou une bougie d'allumage (12).

10. Agencement de préchambre selon une quelconque des revendications précédentes, **caractérisé en ce que** la partie de buse (5) et/ou la partie de verrouillage (8, 8a, 8') sont fabriqués dans un matériau résistant à la chaleur, l'oxydation et/ou la corrosion, comme une céramique.

11. Agencement de préchambre selon une quelconque des revendications précédentes, **caractérisé en ce que** la partie de corps (4) et la partie de verrouillage (8, 8a, 8') sont des composants rotativement symétriques.

12. Agencement de préchambre selon une quelconque des revendications précédentes, **caractérisé en ce que** la partie de corps (4), la partie de buse (5) et la partie de verrouillage (8, 8a, 8') sont des composants remplaçables.
